# EUROPÄISCHE PATENTANMELDUNG

(11) **EP 0 722 085 A1**
(43) Veröffentlichungstag der Anmeldung: **17.07.1996**
(21) Anmeldenummer: 96100467.8
(22) Anmeldetag: 13.01.1996
(51) Int. Cl.: G01N 29/24, G01N 29/26

(54) **Ultraschallprüfvorrichtung**

(30) Priorität: 14.01.1995 DE 19501031; 28.11.1995 DE 19544217
(71) Anmelder: FRAUNHOFER-GESELLSCHAFT ZUR FÖRDERUNG DER ANGEWANDTEN FORSCHUNG E.V., D-80636 München (DE)
(72) Erfinder: Kröning, Michael, Prof. Dr., D-66123 Saarbrücken (DE); Salzburger, Hans-Jürgen, Dr., D-66539 Neunkirchen (DE)

(57) **Zusammenfassung**

Bei einer Ultraschallprüfvorrichtung zum Prüfen insbesondere von als Eisenbahnschienen (4) ausgebildeten Prüfkörpern sind als elektromagnetische Ultaschallwandler ausgebildete Prüfkopfelemente (7) auf einer Lauffläche (2) eines Prüfrades (1) angeordnet. Bei Abrollen der Lauffläche (2) auf einer Fahrfläche (3) der Eisenbahnschiene (4) sind die empfangenen Echosignale in Abhängigkeit der über eine Positionsdetektionsvorrichtung (15, 16, 17) bestimmbaren Stellung des Prüfrades (1) mit einer Steuer- und Auswerteschaltung auswertbar. Diese Ultraschallprüfvorrichtung zeichnet sich dadurch aus, daß bei hohen Translationsgeschwindigkeiten des Prüfrades (1) auch bei einen Versatz aufweisenden Stoßstellen von Eisenbahnschienen (4) die Ultraschallprüfung bis dicht an die Stoßstelle sowie mit einem sehr geringen Anteil an akustischem Rauschen durchführbar ist.

## Beschreibung

Die Erfindung betrifft eine Ultraschallprüfvorrichtung zum Prüfen eines insbesondere als Eisenbahnschiene ausgebildeten Prüfkörpers mit wenigstens einem eine dem Prüfkörper zugewandte Sende/Empfangsseite aufweisenden, als elektromagnetischer Ultraschallwandler ausgebildeten Prüfkopf, mit dem Ultraschall in den Prüfkörper einkoppelbar ist.

Eine derartige Ultraschallprüfvorrichtung ist aus der Druckschrift "Ultrasonic Inspection of Railroad Rails by Electromagnetic Acoustic Transducers (EMATS)" von L. J. Graham und J. F. Martin, erschienen im Mai 1986 als Abschlußbericht für das U.S. Department of Transportation, Federal Railroad Administration, Office of Research and Development mit der Nummer FRA/ORD-86/09, bekannt. Bei dieser Ultraschallprüfvorrichtung sind als Prüfköpfe elektromagnetische Ultraschallwandler vorgesehen, mit denen durch Verschieben des Prüfkopfes in Längsrichtung von Eisenbahnschienen in Abhängigkeit des Verschiebeweges Störstellen wie Laschenkammerbrüche oder Querfehler im Schienenkopf detektierbar sind.

Bei dieser Ultraschallprüfvorrichtung ist durch die elektromagnetisch induzierte Einkopplung von Ultraschall in den als Eisenbahnschiene ausgebildeten Prüfkörper eine Verwendung von einem Koppelmedium wie Wasser vermieden, allerdings weisen die elektromagnetisch betriebenen Prüfköpfe aufgrund ihrer Bauart räumlich inhomogene Magnetfelder auf, die bei Verschieben der Prüfköpfe ein bewegungsinduziertes akustisches Barkhausen-Rauschen hervorrufen, das mit zu detektierenden Echosignalen überlagert und insbesondere bei wenig intensiven Echosignalen das Erkennen von Störstellen erschwert. Außerdem ist zum Einkoppeln einer ausreichend hohen Ultraschallintensität ein sehr geringer Abstand der Prüfköpfe von der Oberfläche des Schienenkopfes notwendig. Dadurch sind jedoch die Prüfköpfe aufgrund geringster Schienenunebenheiten insbesondere bei Stoßstellen von nicht miteinander verschweißten Eisenbahnschienen einem hohen Zerstörungsrisiko ausgesetzt.

Weiterhin ist eine Prüfung mit einer derartigen Ultraschallprüfvorrichtung bei nichtverschweißten Eisenbahnschienen, die häufig an den Stoßstellen einen großen Höhenversatz aufweisen, sowie bei hohen Translationsgeschwindigkeiten von beispielsweise 80 Kilometer pro Stunde nur eingeschränkt unter hohem Aufwand möglich, da zum Schutz des Prüfkopfes vor Zerstörung eine Sicherheitsvorrichtung vorgesehen sein muß, die sich in Bewegungsrichtung vor dem Prüfkopf befindende Stoßstellen mit einem Höhenversatz detektiert und den Prüfkopf in einem Abstand von der Stoßstelle ausreichend hoch anhebt, bevor die Stoßstelle passiert wird. Neben dem hohen apparativen Aufwand ist insbesondere nachteilig, daß dadurch die Gefahr besteht, daß die Endbereiche der Eisenbahnschienen im Bereich der Stoßstellen nicht geprüft werden, weshalb die Stoßstellen mit einer sehr aufwendigen Handprüfung nachzuuntersuchen sind.

Eine weitere Ultraschallprüfvorrichtung ist beispielsweise aus dem Artikel "Schienenprüfung mit Ultraschall und der Ultraschall-Schienenprüfwagen der Deutschen Bundesbahn" von E. Martin und K. Werner aus der Zeitschrift "EISENBAHNTECHNISCHE RUNDSCHAU", Heft 12, 5. Jahrgang, erschienen im Dezember 1956, bekannt. Bei dieser Ultraschallprüfvorrichtung ist ein akustomechanisch betriebener Prüfkopf vorgesehen, der in Längsrichtung einer zu prüfenden Eisenbahnschiene verschiebbar ist, wobei zur Einkopplung der Ultraschallwellen zwischen dein Prüfkopf und der Eisenbahnschiene aus einem Tank Kopplungsflüssigkeit in den Kontaktbereich zwischen dem Prüfkopf und der Eisenbahnschiene zuführbar ist.

In einer Ausgestaltung dieser Ultraschallprüfvorrichtung ist der Prüfkopf an einem von Hand über die Eisenbahnschienen bewegbaren Einschienenwagen angebracht, wobei Fehlerstellen durch Direktbeobachtung eines Bildschirmes erkennbar sind. Für höhere Translationsgeschwindigkeiten ist die Ultraschallprüfvorrichtung auf einem Ultraschall-Schienenprüfwagen angebracht, der sich mit einer typischen Translationsgeschwindigkeit von etwa 30 Kilometer pro Stunde in Längsrichtung der Eisenbahnschiene bewegt, wobei eine automatisierte Aufzeichnung der empfangenen Echosignale in Abhängigkeit des Verschiebeweges vorgenommen wird.

Mit einer derartigen längsverschiebbaren Ultraschallprüfvorrichtung sind zwar in zuverlässiger Weise Gleisanlagen frei von bewegungsinduziertem Barkhausen-Rauschen auf Fehlerstellen überprüfbar, allerdings ist der Einsatz einer derartigen Ultraschallprüfvorrichtung im Winterbetrieb bei sehr tiefen Temperaturen durch die übliche Verwendung von Wasser als Kopplungsflüssigkeit sehr eingeschränkt, da die Gefahr der Eisbildung besteht, die bei einem kostengünstigen Zusatz von Salz neben einer unerwünschten Verschmutzung des Erdreiches auch zu betriebstechnischen Problemen infolge von Korrosion führt. Zum Vermeiden der Korrosionsprobleme läßt sich zwar Spiritus als Kopplungsmittel verwenden, aber dadurch entstehen sehr hohe Kosten.

Der Erfindung liegt die Aufgabe zugrunde, eine Ultraschallprüfvorrichtung der eingangs genannten Art zu schaffen, bei der bei tiefen Temperaturen und hohen Translationsgeschwindigkeiten ein zuverlässiges, weitgehend rauschfreies Prüfen insbesondere auch von einen Höhenversatz aufweisenden Prüfkörpern rationell durchführbar ist.

Diese Aufgabe wird erfindungsgemäß dadurch gelöst, daß mehrere Prüfköpfe an einer auf einer Oberfläche des Prüfkörpers abrollenden Abrollfläche eines Prüfrades angebracht sind, wobei die dem Prüfkörper zugewandte Sende/Empfangsseite jedes Prüfkopfes im Kontaktbereich der Abrollfläche mit der Oberfläche des Prüfkörpers angeordnet ist.

Dadurch, daß die Prüfköpfe an einem auf der Oberfläche des Prüfkörpers abrollenden Prüfrad angebracht sind, können nunmehr auch Prüfkörper mit einem Höhenversatz in dem an den Höhenversatz angrenzenden Bereichen mit einem geringen apparativen Aufwand untersucht werden, da durch Abrollen des Prüfrades der Prüfkopf zum einen bis dicht an die Stoßstelle herangeführt, zum anderen durch Überrollen der Stoßstelle durch das Prüfrad vor Beschädigungen geschützt ist. Durch das Abrollen des Prüfkopfes auf der Oberfläche des Prüfkörpers ist bedingt durch die sich zwangsläufig ergebende ausreichend große Nähe des Prüfkörpers zu der Oberfläche gewährleistet, daß ein zur Detektion von Echosignalen ausreichend intensives Ultraschallsignal einkoppelbar ist. Weiterhin ist das verhältnismäßig hohe akustische Barkhausen-Rauschen vermieden, daß zwangsweise bei längsverschiebbaren Ultraschallprüfvorrichtungen infolge der Ummagnetisierung durch räumlich inhomogene Magnetfelder auftritt.

In einem bevorzugten Ausführungsbeispiel sind an dem Prüfrad mehrere die Prüfköpfe bildende Prüfkopfelemente angebracht, die in in das Prüfrad eingebrachte Ausnehmungen eingefügt sind. Dadurch sind die Sende-/Empfangsseiten der Prüfkopfelemente auf der Abrollfläche des Prüfrades angeordnet und vor mechanischen Beschädigungen weitgehend geschützt. Die Stellung des Prüfrades und damit die Position der Prüfkopfelemente ist mit einer optischen Positionsdetektionsvorrichtung bestimmbar, deren Ausgangssignale in einer Steuer- und Auswerteschaltung zusammen mit den von den Prüfkopfelementen empfangenen Meßsignalen abspeicherbar sind, so daß ausgehend von einer Referenzposition nach Durchführen der Prüfung fehlerhafte Stellen in der Eisenbahnschiene lokalisierbar sind.

Nachfolgend werden Ausführungsbeispiele der Erfindung anhand der Zeichnung erläutert. Es zeigen:
- Fig. 1: eine perspektivische Ansicht eines auf der Lauffläche mit Prüfkopfelementen versehenen Prüfrades beim Abrollen auf einer Eisenbahnschiene;
- Fig. 2: einen Längsschnitt durch die Radscheibe des Prüfrades im Bereich der Eisenbahnschiene;
- Fig. 3: einen Querschnitt durch die Halterung der Prüfkopfelemente im Prüfrad;
- Fig. 4: ein Ausführungsbeispiel eines Prüfkopfelements;
- Fig. 5: ein weiteres Ausführungsbeispiel eines Prüfkopfelements;
- Fig. 6: ein Blockschaltbild einer an die Prüfkopfelemente angeschlossenen Steuer- und Auswerteschaltung; und
- Fig. 7: einen Querschnitt durch die Radscheibe und Radachse des Prüfrades.

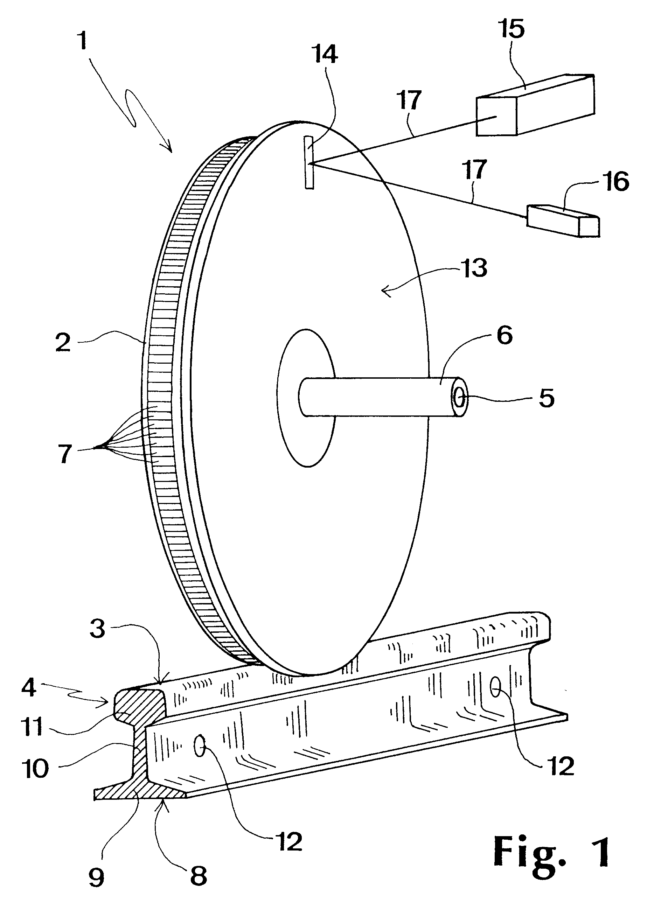

Fig. 1 zeigt in einer perspektivischen Ansicht ein Prüfrad 1, das mit seiner als Abrollfläche dienenden Lauffläche 2 auf einer Fahrfläche 3 einer zu untersuchenden Eisenbahnschiene 4 abrollbar ist. Das Prüfrad 1 ist über eine mit einem Hohlraum 5 versehene Prüfradachse 6 an einem in Fig. 1 nicht dargestellten Prüfwagen drehbar angebracht, wobei zweckmäßigerweise der Prüfwagen mit zwei gleichzeitig auf den beiden Eisenbahnschienen 4 eines Gleisstranges abrollenden Prüfrädern 1 ausgestattet ist.

An der Lauffläche 2 des Prüfrades 1 ist eine Vielzahl von gleichmäßig beabstandeten, aneinandergrenzenden Prüfkopfelementen 7 angebracht. Ein einzelnes Prüfkopfelement 7 beansprucht etwa eine Fläche 5 x 20 Millimeter auf der Lauffläche 2, so daß etwa 500 Stück der Prüfkopfelemente 7 für das Prüfrad 1 notwendig sind. Aus Gründen der Übersichtlichkeit sind in Fig. 1 lediglich einzelne der Prüfkopfelemente 7 mit einem Bezugszeichen versehen.

Durch das Anordnen der Prüfkopfelemente 7 auf der Lauffläche 2 des Prüfrades 1 ist gewährleistet, daß insbesondere bei nicht miteinander verschweißten, sondern Stoß auf Stoß aneinandergrenzenden Eisenbahnschienen 4 eine Prüfung auch bei einem Höhenversatz an den Stoßstellen durchführbar ist. Da ein Abheben der Prüfkopfelemente 7 beim Abrollen des Prüfrades 1 über die Stoßstelle nicht erforderlich ist, läßt sich mit Hilfe des Prüfrades 1 auch bei hohen Translationsgeschwindigkeiten eine Prüfung bis dicht an die Stoßstelle ausführen.

Beim Abrollen der Lauffläche 2 des Prüfrades 1 auf der Fahrfläche 3 der Eisenbahnschiene 4 liegen nacheinander die Prüfkopfelemente 7 auf der Fahrfläche 3 der Eisenbahnschiene 4 auf. Mit den Prüfkopfelementen 7 ist bei einem maximalen Abstand von höchstens etwa einem Millimeter zweckmäßigerweise jedoch höchstens 0,5 Millimeter von der Fahrfläche 3 über eine Sende-/Empfangsseite Ultraschall in die Eisenbahnschiene 4 einkoppelbar. Das beispielsweise von einer Auflagefläche 8 eines Schienenfusses 9 herrührende Rückwandecho läßt sich dabei zur Überprüfung der Ankopplung verwenden, während die von den Störstellen im Schienensteg 10 oder Schienenkopf 11 erzeugten Echosignale der Fehlerdetektion dienen.

Die Prüfkopfelemente 7 lassen sich auch zu Prüfköpfen zusammenfassen und in der sogenannten "Phased-Array-Technik" betreiben, bei der durch zeitlich definierte Ansteuerung der Prüfkopfelemente 7 Schrägeinstrahlungen und Senkrechteinstrahlungen ohne Veränderung der Lage der Prüfkopfelemente 7 beispielsweise zum Detektieren von häufig von Laschenlöchern 12 ausgehenden horizontal und schräg verlaufenden Fehlern erzeugbar sind.

Durch das weitgehend gleitfreie Abrollen der Lauffläche 2 auf der Fahrfläche 3 ist die Relativgeschwindigkeit zwischen den Prüfkopfelementen 7 und der Eisenbahnschiene 4 im Kontaktbereich von Lauffläche 2 und Fahrfläche 3 im wesentlichen Null, so daß das bewegungsinduzierte, akustische Barkhausen-Rauschen in Folge von räumlich inhomogenen Magnetfeldern weitestgehend vermieden und das Signal-zu-Rausch-Verhältnis im Vergleich zu Prüfvorrichtungen, bei denen die Prüfköpfe parallel zur Fahrfläche 3 der Eisenbahnschiene 4 geführt werden, deutlich erhöht ist.

Bei dem in Fig. 1 dargestellten Ausführungsbeispiel ist auf der der Prüfradachse 6 zugewandten Innenseite 13 des Prüfrades 1 ein in radialer Richtung außen angeordneter Positionsspiegel 14 angebracht. Vorteilhafterweise entspricht die radiale Anordnung des Positionsspiegels 14 der radialen Anordnung eines Prüfkopfelements 7, wobei beispielsweise die Breite des Positionsspiegels 14 dem durch die seitlichen Begrenzungen des zugeordneten Prüfkopfelements 7 eingeschlossenen, von dem Mittelpunkt des Prüfrades 1 ausgehenden Winkelsegment entspricht.

Auf der Unterseite des Prüfwagens sind mit einer in Fig. 1 nicht dargestellten Haltevorrichtung ein als Lichtquelle dienender Laser 15 und ein Photodetektor 16 angebracht. Der Laser 15 und der Photodetektor 16 sind so angeordnet, daß ein aus dem Laser 15 emittierter Laserstrahl 17 bei einer Reflexion an dem sich im oberen Radscheitel vorbeidrehenden Positionsspiegel 14 den Photodetektor 16 beaufschlagt.

Bei einem abgewandelten Ausführungsbeispiel sind neben dem Positionsspiegel 14 ein Kranz von weiteren den einzelnen Prüfkopfelementen 7 zugeordneten Prüfkopfelementspiegeln auf der Innenseite 13 des Prüfrades 1 angebracht. Damit ist eine genaue Bestimmung der tatsächlichen Position des Prüfrades 1 möglich.

Weiterhin ist es möglich, einen dem Positionsspiegel 14 entsprechenden Spiegel am Gestell des Prüfwagens anzubringen und ein dem Laser 15 und dem Photodetektor 16 entsprechendes Sende- und Empfangselement auf der Innenseite 13 des Prüfrades 1 anzubringen.

Ferner sind bei nicht dargestellten Ausführungsbeispielen an Stelle des Positionsspiegels 14 mechanische oder elektrisch wirkende Positionsgeber einer Positionsdetektionsvorrichtung angeordnet, mit der die Stellung des Prüfrades 1 detektierbar ist.

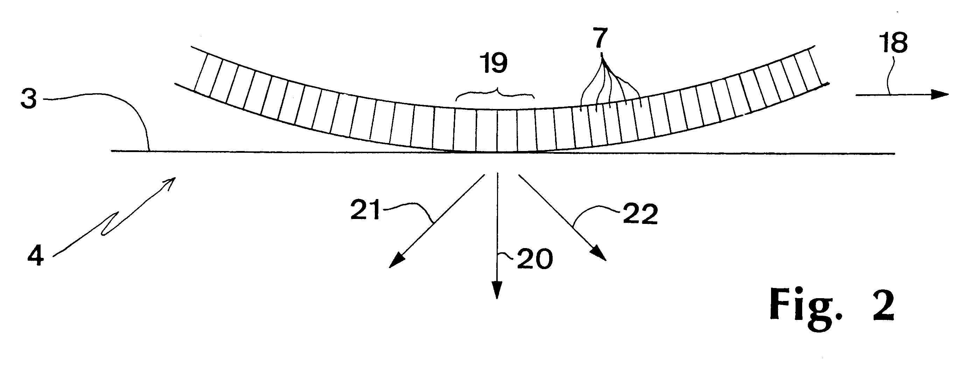

Fig. 2 zeigt einen Längsschnitt durch die Radscheibe des Prüfrades 1 entlang der Fahrfläche 3 der Eisenbahnschiene 4. Das Prüfrad 1 rollt in eine Fahrtrichtung 18. Während das Prüfrad 1 in Richtung der Fahrtrichtung 18 rollt, werden jeweils die der Fahrfläche 3 am nächsten kommenden Prüfkopfelemente 7 zu einem Prüfkopf 19 zusammengeschaltet. Dabei wird jeweils nacheinander das bezüglich der Fahrtrichtung 18 vorne liegende und sich der Fahrfläche 3 annähernde Prüfkopfelement 7 zum Prüfkopf 19 dazugeschaltet und gleichzeitig das bezüglich der Fahrtrichtung 18 am weitesten hinten liegende sich von der Fahrfläche 3 entfernende Prüfkopfelement 7 des Prüfkopfes 19 deaktiviert.

Durch die bereits oben erwähnte "Phased-Array-Technik" ist es möglich, daß durch den von den Prüfkopfelementen 7 gebildeten Prüfkopf 19 Ultraschall sowohl rechtwinklig zur Fahrfläche 3 in Richtung eines Pfeiles 20 als auch unter einem Winkel zur Fahrfläche 3, beispielsweise in Richtung von Pfeilen 21 und 22, in die Eisenbahnschiene 4 einkoppeln läßt.

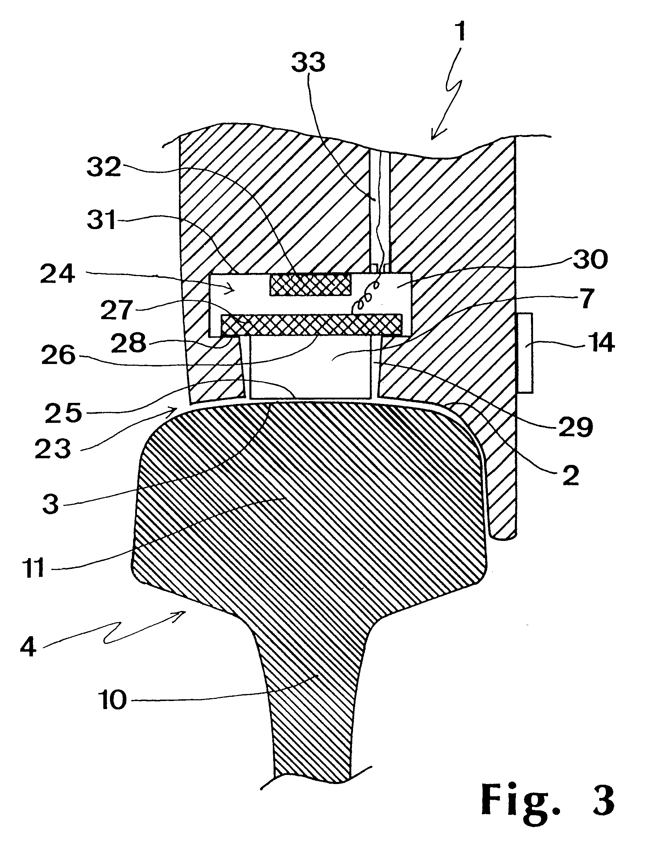

Fig. 3 zeigt einen Querschnitt durch das Prüfrad 1 sowie die Eisenbahnschiene 4 um einen Kontaktbereich 23 zwischen der Lauffläche 2 und der Fahrfläche 3. Das Prüfkopfelement 7 ist in eine in Richtung der Fahrfläche 3 offene, die Lauffläche 2 des Prüfrades 1 durchbrechende Aufnahmekammer 24 eingefügt. Die der Fahrfläche 3 der Eisenbahnschiene 4 zugewandte Meßseite 25 des Prüfkopfelements 7 weist als Sende-/Empfangsseite im Kontaktbereich 23 einen Abstand von höchstens einem Millimeter, zweckmäßigerweise jedoch höchstens 0,5 Millimeter, von der Fahrfläche 3 auf. Durch den kleinen Abstand ist gewährleistet, daß bei einer Ausführung des Prüfkopfelements 7 als elektrodynamischer Ultraschallwandler eine betriebssichere Ankopplung des Prüfkopfelements 7 an die Eisenbahnschiene 4 durchführbar ist. An der in die Aufnahmekammer 24 weisenden Befestigungsseite 26 des Prüfkopfelements 7 ist ein Prüfkopfelementmagnet 27 angebracht, der mit Randbereichen auf einer Kammerschulter 28 aufliegt, die an Übergang eines das Prüfkopfelement 7 aufnehmenden Prüfkopfelementbereichs 29 und eines den Prüfkopfelementmagnet 27 aufnehmenden Magnetbereichs 30 der Aufnahmekammer 24 ausgebildet ist.

In dem Magnetbereich 30 der Aufnahmekammer 24 ist dem Prüfkopfelementmagnet 27 gegenüberliegend an einer innenseitigen Wand 31 der Aufnahmekammer 24 ein Prüfradmagnet 32 angebracht. Bei dem in Fig. 2 dargestellten Ausführungsbeispiel ist der Prüfradmagnet 32 ein Permanentmagnet, während der Prüfkopfelementmagnet 27 als ein mit unterschiedlichen Stromstärken ansteuerbarer Elektromagnet ausgeführt ist. In einem nicht dargestellten abgeänderten Ausführungsbeispiel ist ein steuerbarer Elektromagnet als Prüfradmagnet 32 und ein Permanentmagnet als Prüfkopfelementmagnet 27 vorgesehen.

Die Meßseite 25 des Prüfkopfelements 7 ist durch das Aufliegen des Prüfkopfelementmagneten 27 auf der Kammerschulter 28 sowie durch die bei Betrieb des Prüfkopfelements 7 wirkenden magnetischen Kräfte im wesentlichen rechtwinklig auf die Flächennormale der Fahrfläche 3 ausrichtbar, so daß eine gute Ankopplung des Prüfkopfelements 7 auch bei geringfügigen Lageveränderungen gewährleistet ist. Zweckmäßigerweise ist der Prüfkopfelementbereich 29 von dem Magnetbereich 30 aus in Richtung der Lauffläche 2 konisch zulaufend ausgestaltet, um eine zuverlässige Führung des Prüfkopfelements 7 zu gewährleisten. Die magnetischen Kräfte zwischen dem Prüfkopfelementmagnet 27 und dem Prüfradmagneten 32 sind, wie weiter unten näher erläutert, in Abhängigkeit der Drehgeschwindigkeit des Prüfrades 1 derart einstellbar, daß sie geringfügig kleiner als die bezüglich des Prüfrades 1 radial nach außen wirkende Fliehkraft so wie die dazu gleichgerichteten magnetischen Kräfte zwischen dem Prüfkopfelement 7 und der Eisenbahnschiene 4 im Kontaktbereich 23 sind. Dadurch ist beim Eintreten des Prüfkopfelements 7 in den Kontaktbereich 23 das Prüfkopfelement 7 in Richtung der Fahrfläche 3 zur Ankopplung verschiebbar. Ansonsten liegt der Prüfkopfelementmagnet 27 am Prüfradmagneten 32 an und das Prüfkopfelement 7 ist in das Innere der Aufnahmekammer 24 zurückgezogen vor Beschädigungen geschützt.

Bei einem nicht dargestellten abgewandelten Ausführungsbeispiel ist das Prüfkopfelement 7 in der Aufnahmekammer 24 elastisch gelagert. Dies kann durch eine die Aufnahmekammer 24 ausfüllende elastische Lagerungsmasse oder durch geeignete Federn bewerkstelligt sein. Dabei ist das Prüfkopfelement 7 soweit beweglich, daß die rechtwinklige Ausrichtung der Meßseite 25 in bezug auf die Flächennormale der Fahrfläche 3 sichergestellt ist und daß die durch die magnetischen Kräfte und Fliehkräfte verursachten Bewegungen des Prüfkopfelements 7 in Richtung der Flächennormale ausführbar sind.

Die zum Prüfkopfelement 7 und zum Prüfkopfelementmagnet 27 führenden Leitungen sind in einem Leitungskanal 33 verlegt.

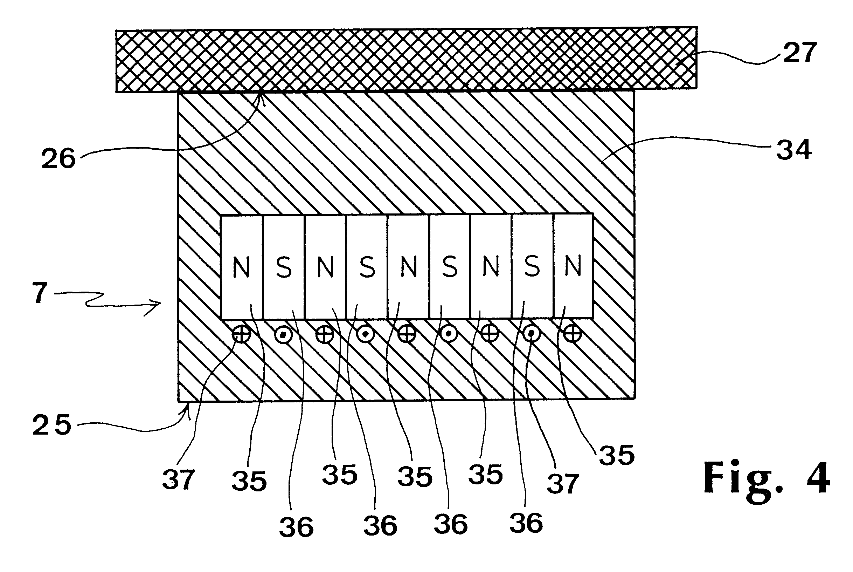

Fig. 4 zeigt im Schnitt den Aufbau des Prüfkopfelements 7. Das Prüfkopfelement 7 weist einen Vergußblock 34 auf, der aus einem verhältnismäßig harten, abriebfesten sowie für elektromagnetische Wellen durchlässigen Material gefertigt ist. An der Befestigungsseite 26 des Vergußblocks 34 ist der Prüfkopfelementmagnet 27 angebracht.

Der Meßseite 25 benachbart sind stabförmige Permanentmagneten 35 und 36 mit in der Richtung der Meßseite 25 alternierenden Polaritäten N für magnetisch Nord und S für magnetisch Süd mit ihren Flachseiten aneinandergrenzend angeordnet, wobei zwischen der Meßseite 25 und der Anordnung der Permanentmagneten 35 und 36 eine Hochfrequenzspule 37 mit entsprechend der Polarität der Permanentmagnete 35 und 36 alternierendem Wicklungssinn vorgesehen ist. Das gemäß Fig. 4 aufgebautes Prüfkopfelement 7 eignet sich zum Erzeugen von horizontal polarisierten Transversalwellen (SH-Wellen).

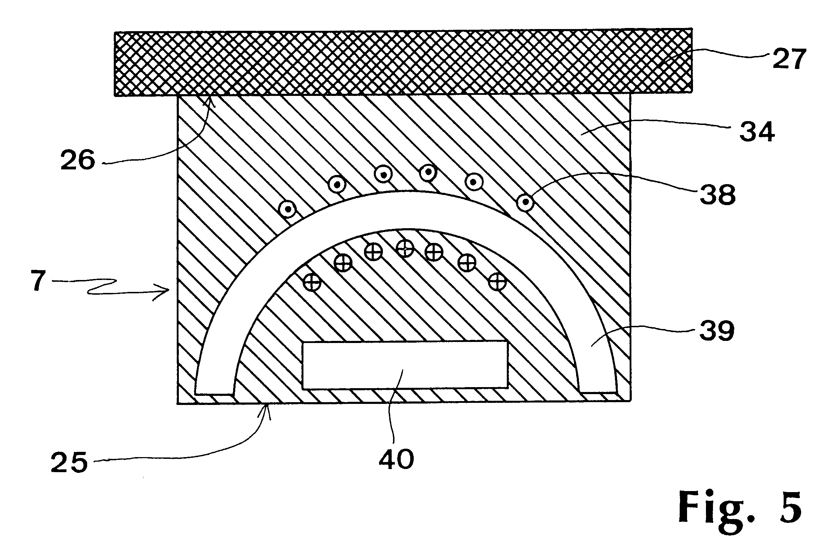

Fig. 5 zeigt ein weiteres Ausführungsbeispiel des Prüfkopfelements 7 zum Erzeugen von horizontal polarisierten Transversalwellen. Dieses Prüfkopfelement 7 weist einen von einer Hochfrequenzspule 38 umwickelten magnetisierbaren Ringbandkern 39 auf. Der Ringbandkern 39 ist halbkreisförmig ausgestaltet und mit seinen Enden in Richtung der Meßseite 25 weisend in dem Vergußblock 34 angeordnet. Zwischen den Enden des Ringbandkerns 39 sind stabförmige Permanentmagneten 40 angeordnet, die sich mit ihrer Längsrichtung zwischen den Enden des Ringbandkernes 39 erstrecken. Das in Fig. 5 dargestellte Prüfkopfelement 7 ist mit einem verhältnismäßig geringen Fertigungsaufwand herstellbar.

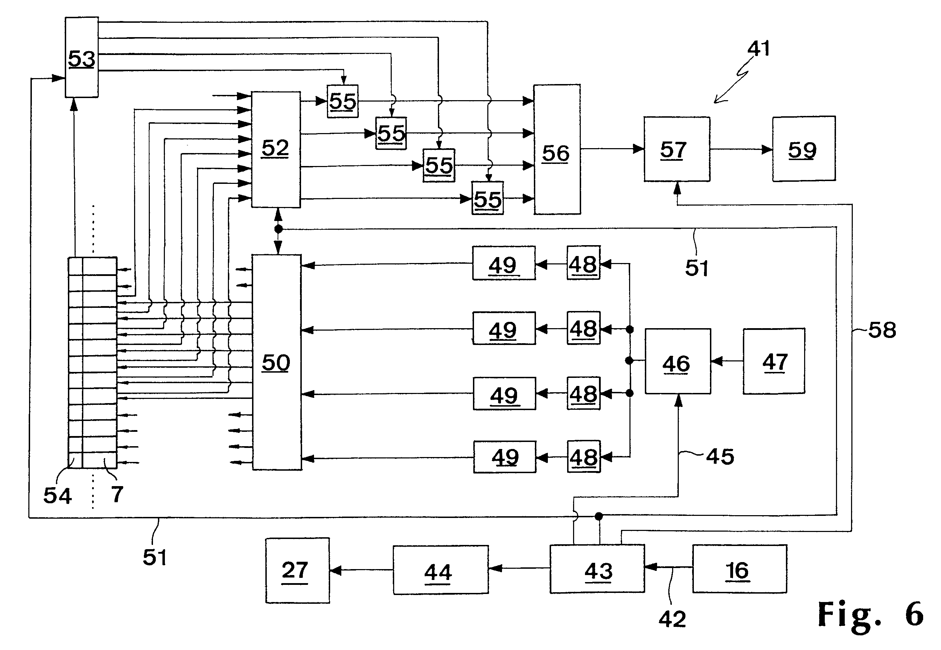

Fig. 6 zeigt in einem Blockschaltbild ein Ausführungsbeispiel einer Steuer- und Auswerteschaltung 41. Bei dieser Steuer- und Auswerteschaltung 41 ist der Photodetektor 16 über eine Photodetektionsleitung 42 an einem Positionsrechner 43 angeschlossen. Der Positionsrechner 43 bestimmt die zwischen zwei Meßpulsen des Photodetektors 16 liegende Zeit und berechnet daraus die Umfangsgeschwindigkeit des Prüfrades 1. Anhand der gemessenen Zeitspanne zwischen zwei Meßpulsen des Photodetektors 16 erzeugt der Positionsrechner 43 für die nachfolgende Umdrehung des Prüfrades 1 ein Magnetsteuersignal. Dieses Magnetsteuersignal ist in eine Magnetsteuereinheit 44 einspeisbar, welche die den Prüfkopfelementen 7 zugeordneten Prüfkopfelementmagnete 27 steuert. Mit der Magnetsteuereinheit 44 sind bei dem in Fig. 3 dargestellten Ausführungsbeispiel die Prüfkopfelementmagnete 27 derart ansteuerbar, daß die zwischen den Prüfkopfelementmagneten 27 und den Prüfradmagneten 32 wirkenden Anziehungskräfte kleiner als die in Abhängigkeit der Drehgeschwindigkeit des Prüfrades 1 wirkende Fliehkraft sowie die magnetischen Anziehungskräfte zwischen den Prüfkopfelementen 7 und der Fahrfläche 3 sind.

In eine Triggerleitung 45 ist vom Positionsrechner 43 ein Triggersignal einspeisbar. Die Triggerleitung 45 ist an einen Pulsgenerator 46 angeschlossen. Dem Pulsgenerator 46 ist ein von einem Hochfrequenzgenerator 47 erzeugtes Hochfrequenzsignal zum Erzeugen von Ultraschallwellen in der Eisenbahnschiene 4 zuführbar. Mit dem Pulsgenerator 46 sind mit der von dem Hochfrequenzgenerator 47 eingespeisten Hochfrequenz als Trägerfrequenz in Abhängigkeit von den vom Positionsrechner 43 erzeugten Triggersignalen Sendepulse erzeugbar. Die Folgefrequenz der Sendepulse ist durch die Frequenz des vom Positionsrechner 43 gelieferten Triggersignales so eingestellt, daß etwa alle drei Millimeter Abrollweg des Prüfrades 1 ein Sendepuls erzeugt ist. Typischerweise liegt die Folgefrequenz der von dem Pulsgenerator 46 ausgesandten Sendepulse bei einer Umfangsgeschwindigkeit der Lauffläche 2 von 80 Kilometern pro Stunde bei etwa sieben Kilohertz. Die Dauer der Sendepulse beträgt wenigstens etwa zehn Schwingungsperioden der Trägerfrequenz.

Die an einem Hochfrequenzausgang des Pulsgenerators 46 anliegenden Sendepulse sind Sendeverzögerungsgliedern 48 einspeisbar, mit denen der Sendepuls je nach der gewünschten Einstrahlungsrichtung des Ultraschallsignals in der Eisenbahnschiene 4 um eine bestimmte Zeitdauer verzögerbar ist. Die Ausgangssignale der Sendeverzögerungsglieder 48 sind nachgeschalteten Leistungsverstärkern 49 zuführbar, deren Ausgänge an einen Sendemultiplexer 50 angeschlossen sind. Die Anzahl der Sendeverzögerungsglieder 48 und Leistungsverstärkern 49 richtet sich nach der Zahl der den Prüfkopf 19 bildenden Prüfkopfelemente 7.

Mit dem Sendemultiplexer 50 lassen sich die von den Leistungsverstärkern 49 erzeugten Sendepulse den Prüfkopfelementen 7, die den Prüfkopf 19 bilden, zuführen. Die Auswahl der Prüfkopfelemente 7 erfolgt durch den Positionsrechner 43, der aus der errechneten Umfangsgeschwindigkeit des Prüfrades 1 und aus der bekannten Position der Prüfkopfelemente 7 auf dem Prüfrad 1 den aktuellen Abstand der Prüfkopfelemente 7 von der Fahrfläche 3 berechnet. Der Positionsrechner 43 wählt die der Fahrfläche 3 am nächsten liegenden Prüfkopfelemente 7 aus und erzeugt ein entsprechendes Auswahlsignal, das über eine Auswahlleitung 51 sowohl dem Sendemultiplexer 50 als auch einem Empfangsmultiplexer 52 und einem Sensormultiplexer 53 zuführbar ist.

Die den Prüfkopf 19 bildenden Prüfkopfelemente 7 sind bei Unterschreiten eines voreinstellbaren Mindestabstandes zu der Fahrfläche 3 durch zugeordnete Abstandssensoren 54 freigeschaltet sowie mit den zeitlich versetzt einlaufenden Sendepulsen beaufschlagt und erzeugen in Abhängigkeit der Phasenverschiebung der Sendepulse einen Ultraschallpuls mit einer schrägwinkligen oder rechtwinkligen Ausbreitungsrichtung in der Eisenbahnschiene 4. Die von Rißstellen in der Eisenbahnschiene 4 zurückgeworfenen oder an der Oberfläche der Eisenbahnschiene 4 reflektierten Ultraschallpulse sind mit den Prüfkopfelementen 7 detektierbar. Die Empfangssignale werden durch geeignete Verstärker verstärkt und als Empfangspulse dem Empfangsmultiplexer 52 zugeleitet.

Zum Kalibrieren der den rückgeworfenen Ultraschallpulsen zugeordneten Empfangspulsen sind die jeweils den Prüfkopfelementen 7 zugeordneten Abstandssensoren 54 vorgesehen, die beispielsweise nach dem Prinzip von Wirbelstromspulen den Abstand der Prüfkopfelemente 7 von der Fahrfläche 3 bestimmen. Es ist vorgesehen, daß zum Vermeiden von Fehlmessungen lediglich Empfangssignale berücksichtigt werden, die bei einem Abstand der Prüfkopfelemente 7 von beispielsweise weniger als 0,5 Millimeter von der Fahrfläche 3 auftreten.

Über den Empfangsmultiplexer 52 sind die Empfangssignale der Prüfkopfelemente 7 Empfangsverzögerungsgliedern 55 einspeisbar, denen weiterhin über den Sensormultiplexer 53 die Ausgangssignale der zugehörigen Abstandssensoren 54 zuführbar sind. Mit den Empfangsverzögerungsgliedern 55 ist neben einer Korrektur der Empfangssignale bezüglich der Abstände der Prüfkopfelemente 7 von der Fahrfläche 3 eine Umkehr der durch die Sendeverzögerungsglieder 48 erzeugten Phasenverschiebung durchführbar.

Die bezüglich der Phasenverschiebung und dem Abstand der zugeordneten Prüfkopfelemente 7 von der Fahrfläche 3 korrigierten Empfangssignale aus den Empfangsverzögerungsgliedern 55 sind einem Summierverstärker 56 einspeisbar, der die Empfangssignale zu einem Summensignal addiert und falls nötig verstärkt. Das Summensignal ist einem Datenspeicher 57 zuführbar, in dem das Summensignal zusammen mit einem zugeordneten, von dem Positionsrechner 43 über eine Positionsleitung 58 dem Datenspeicher 57 zugeführten Positionssignal abspeicherbar ist.

Die in dem Datenspeicher 57 abgespeicherten Werte sind mittels einer an dem Datenspeicher 57 angeschlossenen Datenausgabeeinheit 59 zum Lokalisieren von Störstellen in bezug auf eine zu Beginn des Meßzyklus festgelegte Referenzposition lokalisierbar.

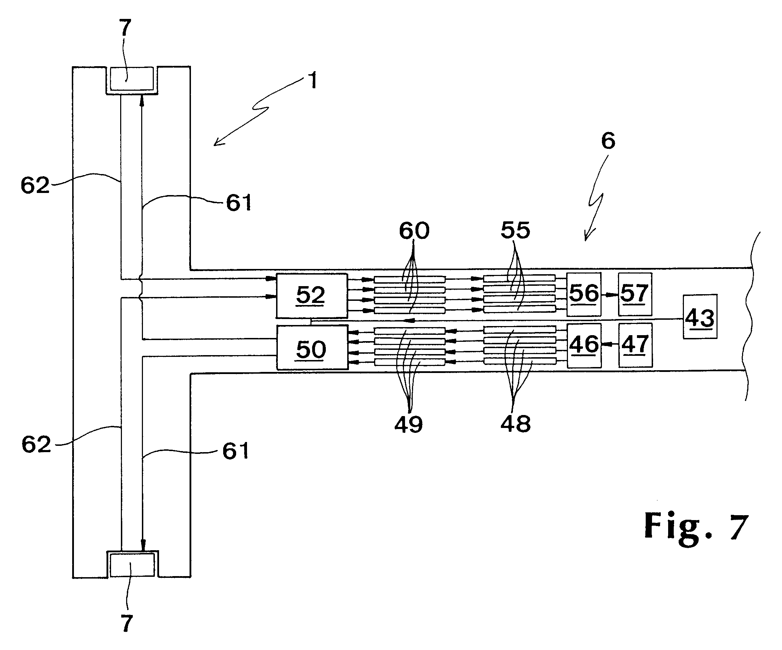

Fig. 7 zeigt einen Querschnitt durch das Prüfrad 1, der eine mögliche Anordnung der Steuer- und Auswerteschaltung 41 aus Fig. 6 in dem Prüfrad 1 verdeutlicht. Das Prüfrad 1 ist aus einer Innen- und Außenscheibe, die miteinander verschraubt sind, zusammengesetzt und innen hohl ausgeführt. Die Innenscheibe weist in ihrer Mitte eine kreisförmige Öffnung auf, an die die Prüfradachse 6 angesetzt ist. Im Hohlraum 5 der Prüfachse 6 sind der Hochfrequenzgenerator 47, der Pulsgenerator 46, die Sendeverzögerungsglieder 48 und Leistungsverstärker 49 sowie der Sendemultiplexer 50, der Empfangsmultiplexer 52, eine Reihe von geeigneten Empfangsverstärkern 60, die Empfangsverzögerungsglieder 55, der Summenverstärker 56 und der Datenspeicher 57 angeordnet. Der Sendemultiplexer 50 und der Empfangsmultiplexer 52 sind jeweils über Sendeleitungen 61 und Empfangsleitungen 62 an die an der Lauffläche 2 angeordneten Prüfkopfelemente 7 angeschlossen. Außerdem befindet sich im Hohlraum 5 der Positionsrechner 43, der beispielsweise an einen auf der Innenseite 13 des Prüfrades 1 angeordneten Photodetektor angeschlossen ist. Die Stromversorgung der Steuer- und Auswerteschaltung 41 ist entweder über eine geeignete Transformatoranordnung und eine Vorrichtung zum Gleichrichten und Regeln der eingespeisten Wechselspannung oder über Schleifkontakte bewerkstelligt. Ferner lassen sich die im Datenspeicher 57 abgelegten Daten beispielsweise über eine optische Schnittstelle an die Datenausgabeeinheit 59 übertragen. Eine optische serielle Schnittstelle umfaßt beispielsweise eine auf der Symmetrieachse der Prüfradachse 6 angeordnete Leuchtdiode, deren entlang der Symmetrieachse der Prüfradachse 6 verlaufender Lichtstrahl über eine geeignete Spiegelanordnung auf einen am Prüfwagen befestigten stationären Empfänger gelenkt ist.

## Patentansprüche

1. Ultraschallprüfvorrichtung zum Prüfen eines insbesondere als Eisenbahnschiene ausgebildeten Prüfkörpers (4) mit wenigstens einem eine dem Prüfkörper (4) zugewandte Sende/Empfangsseite aufweisenden, als elektromagnetischer Ultraschallwandler ausgebildeten Prüfkopf (19), mit dem Ultraschall in den Prüfkörper (4) einkoppelbar ist, **dadurch gekennzeichnet**, daß mehrere Prüfköpfe (19) an einer auf einer Oberfläche (3) des Prüfkörpers (4) abrollenden Abrollfläche (2) eines Prüfrades (1) angebracht sind, wobei die dem Prüfkörper (4) zugewandte Sende-/Empfangsseite (25) jedes Prüfkopfes (1) in Kontaktbereich (23) der Abrollfläche (2) mit der Oberfläche (3) des Prüfkörpers (4) angeordnet ist.

2. Ultraschallprüfvorrichtung nach Anspruch 1, dadurch gekennzeichnet, daß die Prüfköpfe (19) von im gleichen Winkelabstand in unmittelbarer Nähe zueinander auf der Abrollfläche (2) verteilten Prüfkopfelementen (7) gebildet sind.

3. Ultraschallprüfvorrichtung nach Anspruch 2, dadurch gekennzeichnet, daß jeweils eine Anzahl benachbarter Prüfkopfelemente (7) zu den Prüfköpfen (19) zusammenschaltbar sind.

4. Ultraschallprüfvorrichtung nach Anspruch 2 oder 3, dadurch gekennzeichnet, daß das Prüfkopfelement (7) in einer in das Prüfrad (1) eingebrachten Ausnehmung (24) vorgesehen ist.

5. Ultraschallprüfvorrichtung nach Anspruch 4, dadurch gekennzeichnet, daß das Prüfkopfelement (7) in der Ausnehmung (24) rechtwinklig zu der Flächennormalen der Oberfläche (3) des Prüfkörpers (4) ausrichtbar gelagert ist.

6. Ultraschallprüfvorrichtung nach einem der Ansprüche 2 bis 5, dadurch gekennzeichnet, daß das Prüfkopfelement (7) in einem Vergußblock (34) vorgesehen ist.

7. Ultraschallprüfvorrichtung nach einem der Ansprüche 2 bis 6, dadurch gekennzeichnet, daß das Prüfkopfelement (7) bei Positionen außerhalb des Kontaktbereiches (23) mit einer Rückzugvorrichtung (27, 32) in die Ausnehmung (24) rückziehbar ist.

8. Ultraschallprüfvorrichtung nach Anspruch 7, dadurch gekennzeichnet, daß die Rückzugsvorrichtung eine in der Ausnehmung (24) vorgesehene Anordnung mit einem Permanentmagneten (32) und einem ansteuerbaren Elektromagneten (27) aufweist.

9. Ultraschallprüfvorrichtung nach Anspruch 8, dadurch gekennzeichnet, daß der Elektromagnet (27) in Abhängigkeit der Drehgeschwindigkeit des Prüfrades (1) so ansteuerbar ist, daß die Rückzugskraft auf den Permanentmagneten (32) im Kontaktbereich (23) kleiner als die gegengerichtete Fliehkraft und die gegengerichtete Anziehungskraft zwischen dem Prüfkopfelement (7) und dem Prüfkörper (4) ist.

10. Ultraschallprüfvorrichtung nach einem der Ansprüche 2 bis 9, dadurch gekennzeichnet, daß mit einer Abstandsmeßvorrichtung (54) der Abstand des Prüfkopfelements (7) von der Oberfläche (3) des Prüfkörpers (4) meßbar ist.

11. Ultraschallprüfvorrichtung nach Anspruch 10, dadurch gekennzeichnet, daß das Prüfkopfelement (7) mit einem vorbestimmten, mit der Abstandsmeßvorrichtung (54) meßbaren Höchstabstand von der Oberfläche (3) des Prüfkörpers (4) betreibbar ist.

12. Ultraschallprüfvorrichtung nach Anspruch 10 oder 11, dadurch gekennzeichnet, daß mit dem von der Abstandsmeßvorrichtung (54) detektierten Abstand das von dem Prüfkopfelement (7) empfangene Signal kalibrierbar ist.

13. Ultraschallprüfvorrichtung nach einem der Ansprüche 2 bis 12, dadurch gekennzeichnet, daß die den Prüfkopf (19) bildenden Prüfkopfelemente (7) zum Aussenden von Ultraschall in verschiedene Abstrahlungsrichtungen (20, 21, 22) zeitlich versetzt ansteuerbar sind.

14. Ultraschallprüfvorrichtung nach einem der Ansprüche 2 bis 13, dadurch gekennzeichnet, daß mit einer Positionsdetektionsvorrichtung (14, 15, 16, 43) die Stellung des Prüfrades (1) bestimmbar ist.

15. Ultraschallprüfvorrichtung nach Anspruch 14, dadurch gekennzeichnet, daß mit einer Recheneinheit (43) die Stellungen des Prüfrades (1) in bezug auf eine Referenzposition in Ortspositionen auf dem Prüfkörper (4) umrechenbar sind.

16. Ultraschallprüfvorrichtung nach Anspruch 14 oder 15, dadurch gekennzeichnet, daß die Positionsdetektionsvorrichtung wenigstens einen an dem Prüfrad (1) angebrachten Reflektor (14) aufweist, mit dem von einer Lichtquelle (15) abgestrahltes Licht (17) auf einen Photodetektor (16) lenkbar ist.

17. Ultraschallprüfvorrichtung nach einem der Ansprüche 14 bis 16, dadurch gekennzeichnet, daß mit einer Auswerteschaltung (41) ausgehend von einer Referenzposition die von wenigstens einem Prüfelement (7) an verschiedenen Stellungen des Prüfrades (1) empfangenen Ultraschallsignale unter Zuordnung der zugehörigen Stellungen des Prüfrades (1) abspeicherbar sind.

18. Ultraschallprüfvorrichtung nach einem der Ansprüche 2 bis 17, dadurch gekennzeichnet, daß Ultraschall an einer Stellung des Prüfrades (1) in wenigstens zwei Winkelbereiche abstrahlbar ist.

19. Ultraschallprüfvorrichtung nach Anspruch 18, dadurch gekennzeichnet, daß die rückgeworfenen, empfangenen Ultraschallsignale aus wenigstens zwei Winkelbereichen unabhängig voneinander unter Zuordnung zu der Stellung des Prüfrades (1) abspeicherbar sind.
